# EUROPÄISCHE PATENTANMELDUNG

(11) **EP 0 853 034 A2**
(43) Veröffentlichungstag der Anmeldung: **15.07.1998**
(21) Anmeldenummer: 98250003.5
(22) Anmeldetag: 08.01.1998
(51) Int. Cl.: B62H 5/00

(54) **Diebstahlsicherung für Fahrräder**

(30) Priorität: 12.08.1997 DE 29714771 U; 09.01.1997 DE 29700926 U
(71) Anmelder: Petersen, Carsten, 10115 Berlin (DE)
(72) Erfinder: Petersen, Carsten, 10115 Berlin (DE)
(74) Vertreter: Specht, Volker

(57) **Zusammenfassung**

Bei einer Diebstahlsicherung für Fahrräder, die bereits über ein Bügelschloß oder dgl. an einen festen Gegenstnd angeschlossen sind, werden lösbare Fahrradteile so gesichert, daß deren Befestigungsmittel von einer um dieses drehbaren, durch ein Sperrelement (9) gehaltenen Sicherungshülse (8) umgeben ist. Nur in der auf Sattel und Lenker gestellten Fahrradposition fällt das Sperrelement vollständig in eine Vertiefung (7) des Befestigungsmittels. In dieser Lage kann die Sicherungshülse teilweise abgezogen werden, aber nur soweit, daß das Befestigungsmittel zugänglich ist und das Sperrelement durch die Sicherungshülse eingekammert bleibt und nicht verlorengehen kann. Bei einem Spannexzenter mit um diesen drehbarem Betätigungshebel fällt ein Sperrelement in der auf den Kopf gestellten Fahrradposition aus einem Führungskanal im Betätigungshebel in eine Aufnahme im Befestigungsmittel und verbindet beide Teile miteinander, so daß ein Lösen des betreffenden Fahrradteils ebenfalls nur in dieser Lage möglich ist.

## Beschreibung

Die Erfindung betrifft eine Diebstahlsicherung für Fahrräder, die bereits durch ein Bügelschloß oder dgl. mit einem im wesentlichen feststehenden Haltemittel verbunden sind, zum Verhindern der unbefugten Demontage von mit einem als Befestigungsmutter oder Spannexzenter ausgebildeten Befestigungsmittel angebrachten Fahrradteilen, wobei die Befestigungsmittel nur in der auf den Kopf gestellten Lage des Fahrrades lösbar sind.

Es sind verschiedene Vorrichtungen zum Schutz von Fahrrädern oder Teilen derselben vor Diebstahl bekannt. Die Diebstahlsicherung wird überwiegend durch mit einem Schloß versehene Bügel, Ketten oder Stahlseile vorgenommen. Es besteht aber dennoch die Möglichkeit die Laufräder oder den Sattel zu entwenden, da diese in aller Regel nicht mit angeschlossen werden können.

Bei einer aus der DE 296 10 148.6 bekannten Vorrichtung zur Sicherung der Räder und des Sattels von Fahrrädern mit einer die betreffende Befestigungsmutter drehbeweglich umfassenden und axial arretierbaren Sicherungshülse weist die Befestigungsmutter eine umlaufende, halbkreisförmige Sperrnut auf, der auf der Innenseite der Sicherungshülse eine Ausnehmung gegenübersteht, in der beispielsweise ein als Kugel ausgebildetes Sperrelement teilweise aufgenommen wird, so daß die Sicherungshülse zwar gedreht, aber nicht von der Befestigungsmutter abgezogen werden kann. Die Sperrnut verfügt jedoch an der in der Gebrauchslage des Fahrrades zur Fahrbahn gerichteten Seite über eine Vertiefung, in der das Sperrelement aufgrund der Schwerkraft vollständig aufgenommen wird, sobald das Fahrrad gegenüber seiner Gebrauchslage um seine horizontale Achse um 180° gedreht wird und das Sperrelement durch Drehen der Sicherungshülse zu dieser Stelle gedreht wird. Dann kann die Sicherungshülse abgezogen und das betreffende Teil durch Lösen der Befestigungsmutter demontiert werden. Wenn das Fahrrad in der Gebrauchslage durch ein Bügelschloß oder dgl. mit einem festen Gegenstand verbunden ist und somit nicht gedreht werden kann, ist die Abnahme der Sicherungshülse und das Lösen der Befestigungsmutter nicht möglich.

Diese sehr vorteilhafte Diebstahlsicherung ist jedoch insofern nachteilig, als der Befestigungsmutter zwei lose Einzelteile, nämlich die Sicherungshülse und das Sperrelement zugeordnet sind, von denen insbesondere das vergleichsweise sehr kleine Sperrelement beim Lösen der Befestigungsmutter sehr leicht verlorengehen kann und dann die Diebstahlsicherung nicht mehr gewährleistet ist. Aufgrund der vorhandenen Einzelteile ist der Montagevorgang zudem zeitaufwendig.

Darüber hinaus kommen vielfach auch Schnellspannvorrichtungen zur Befestigung der Einzelteile von Fahrrädern zur Anwendung. Derartige Schnellspanner sind insofern von Vorteil, als bei Reparaturen und zur Transporterleichterung ohne Werkzeug eine schnelle und einfache Montage und Demontage des Fahrrades möglich ist und die Befestigungselemente nicht verlorengehen können. Ein wesentlicher Nachteil besteht jedoch darin, daß die schnelle Demontierbarkeit auch einem Dieb sehr entgegenkommt und mit den ungesicherten Schnellspannvorrichtungen ausgeführte Fahrräder bezüglich bestimmter Einzelteile besonders diebstahlgefährdet sind.

Der Erfindung liegt daher die Aufgabe zugrunde, eine Diebstahlsicherung der eingangs erwähnten Art anzugeben, mit der die mit Schnellspannern oder Befestigungsmuttern angebrachten Einzelteile gegen Diebstahl gesichert sind und gleichzeitig eine schnelle und einfache Montage der betreffenden Fahrradteile durch den befugten Benutzer ohne Verlust von Befestigungselementen gewährleistet ist.

Erfindungsgemäß wird die Aufgabe bei Fahrradteilen, die mit von Sicherungshülsen umgebenen Befestigungsmuttern angebracht sind, mit einer Diebstahlsicherung gemäß den Merkmalen des Patentanspruchs 1 gelöst.

Obwohl sich die Befestigungsmutter in dem entsicherten Zustand befindet und gelöst oder angezogen werden kann, verbleibt die Sicherungshülse mit dieser fest verbunden. Das heißt, der Montagevorgang wird vereinfacht und verkürzt. Das Sperrelement bleibt in der Vertiefung in der Befestigungsmutter und kann beim Lösen der Befestigungsmutter ebensowenig verlorengehen wie die Sicherungshülse.

Das Sperrelement ist zudem vor Schmutz geschützt, so daß seine freie Beweglichkeit in der Sperrnut bzw. der Vertiefung der Befestigungsmutter nicht beeinträchtigt wird und damit die Funktionsfähigkeit der Diebstahlsicherung gewährleistet ist.

In weiterer Ausbildung der Erfindung wird die Aufgabe bei Verwendung eines Schnellspanners mit einem mittels eines Betätigungshebels um eine Drehachse drehbaren Spannexzenter als Befestigungsmittel mit den Merkmalen des Patentanspruchs 8 gelöst.

Wenn sich in diesem Fall das Fahrrad in der üblichen Gebrauchsposition befindet, weist der wie die Sicherungshülse frei drehbare, aber am Spannexzenter verbleibende Betätigungshebel zur Fahrbahn und der bewegliche Mitnehmer ist vollständig in dem Führungskanal aufgenommen. Erst wenn das Fahrrad um 180° gedreht wird, d.h. auf den Kopf gestellt wird, was wiederum nur bei nicht durch ein Bügelschloß oder dgl. an einen festen Gegenstand angeschlossenem Fahrrad möglich ist, kann der Mitnehmer beim Verdrehen des Betätigungshebels aufgrund der Schwerkraft in die nun nach oben gerichtete Mitnehmeraufnahme eingreifen, so daß der Spannexzenter gedreht werden kann.

Damit wird eine weitere Diebstahlsicherung zur Verfügung gestellt, bei der das eigentliche Befestigungsmittel durch ein um dieses drehbewegliches Element in der üblichen Gebrauchslage des Fahrrades für einen Unbefugten nicht zugänglich ist bzw. erst in der auf den Kopf gestellten Lage gelöst werden kann. Die Befestigungselemente verbleiben auch hier am Fahrrad und können nicht verlorengehen. Gleichermaßen ist - frei von Verschmutzungsgefahr - die freie Beweglichkeit des Mitnehmers gewährleistet.

Weitere Merkmale und vorteilhafte Ausgestaltungen der Erfindung ergeben sich aus den Unteransprüchen 2 bis 8 und 10 bis 12 sowie der Beschreibung der Ausführungsbeispiele.

Zwei Ausführungsbeispiele der Erfindung werden anhand der Zeichnung näher erläutert. Es zeigen:
- Fig. 1: eine schematisierte Schnittdarstellung einer Befestigungsmutternsicherung für die Laufräder eines Fahrrades;
- Fig. 2: eine schematische Darstellung der Sicherungsvorrichtung nach Fig. 1 in der Demontageposition mit mit frei zugänglicher Befestigungsmutter;
- Fig. 3: eine schematisierte Schnittdarstellung einer weiteren Ausführungsvariante einer Mutternsicherung; und
- Fig. 4: eine schematische Darstellung der Sicherungsvorrichtung nach Fig. 3 im Montage- oder Demontagezustand.
- Fig. 5: eine Seitenansicht einer Schnellspannvorrichtung zum Befestigen eines Laufrades oder dgl. in spanntem Zustand bei einer um 180° gegenüber der Gebrauchsposition gedrehten Fahrrad;
- Fig. 6: die Schnellspannvorrichtung in der Fahrradstellung nach Fig. 1, jedoch in gelöstem Zusand zur Demontage des Laufrades;
- Fig. 7: die Schnellspannvorrichtung in verspanntem Zustand bei üblicher Fahrposition des Fahrrades; und
- Fig. 8: die Schnellspannvorrichtung wie in Fig. 3, aber in bei Verstellung des Betätigungshebels weiterhin verspanntem Zustand.

In einer ersten Ausführungsvariante besteht die Befestigungsmuttersicherung aus einer auf den Gewindeabschnitt 10 einer Laufradachse aufschraubbaren Befestigungsmutter 1, die auf der zum Achsende gerichteten Seite mit einem kreiszylindrischen Haltebund 2 einstückig verbunden ist. Als Verlängerung der Gewindebohrung 4 der Befestungsmutter 1 ist in dem Haltebund 2 eine Sackbohrung 5 ausgebildet, um beim Anziehen der Befestigungsmutter 1 einen Teil des Achsendes der Laufradachse aufnehmen zu können. Der Durchmesser des Haltebundes 2 ist größer als die größte Weite der Befestigungsmutter 1, so daß der Haltebund an der zur Achsmitte gerichteten Seite der Befestigungsmutter 1 einen umlaufenden senkrechten Anschlag 3 bildet. In der Umfangsfläche des Haltebundes 2 ist eine umlaufende, im wesentlichen halbkreisförmige Sperrnut 6 ausgebildet, die an einer Stelle eine kreiszylindrische Vertiefung 7 aufweist. Der Durchmesser der kreiszylindrischen Vertiefung 7 entspricht der Breite der Haltenut 6, während deren Tiefe die zweifache Nutbreite aufweist.

Die Sicherungshülse 8 besteht aus einem an einer Stirnseite geschlossenen, kreisförmigen Außenzylinder 8a und einem in diesen unlösbar einfügbaren kreisförmigen Innenzylinder 8b, der an der offenen Seite der Sicherungshülse 8 einen radial nach innen gerichteten umlaufenden Anschlagbund 8c aufweist. In dem Innenzylinder 8b befindet sich eine Aussparung 8d, die bei vollständig auf den Haltebund 2 aufgeschobener Sicherungshülse 8 auf einer Höhe mit der umlaufenden Haltenut 6 im Haltebund 2 liegt.

In dem durch die Aussparung 8d und und die Haltenut 6 gebildeten Hohlraum befindet sich eine Sperrkugel 9. Das Zusammenfügen der Befestigungsmutternsicherung erfolgt in der Weise, daß nach dem Aufschieben des Innenzylinders 8b auf den Haltebund 2 und dem Einlegen der Sperrkugel 9 in die Aussparung 8d der Außenzylinder 8a auf den Innnenzylinder 8b aufgeschoben und durch Aufpressen, Aufschrumpfen, Aufkleben oder ähnliche Verfahren oder auch formschlüssig unlösbar mit diesem verbunden wird. Auf diese Weise ist die Sperrkugel 9 unverlierbar zwischen der Sicherungshülse 8 und dem Haltebund 2 der Befestigungsmutter 1 eingekammert, da die Sicherungshülse 8 nur bis zum Anschlag 3 verschoben und somit nicht vollständig von der Befestigungsmutter 1 abgezogen werden kann.

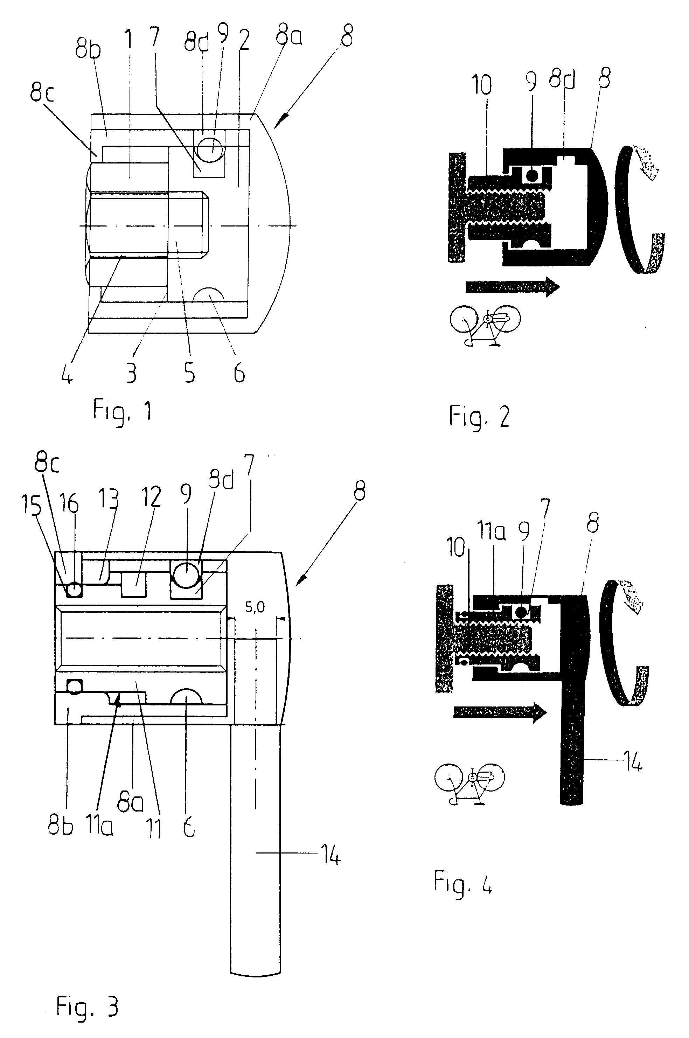

Wenn das Fahrrad aus seiner Gebrauchslage um die horizontale Achse um 180° gedreht wird, was nur in dem nicht an einen festen Gegenstand angeschlossenen Zustand erfolgen kann, gelangt die Vertiefung 7 in die in Fig. 1 dargestellte obere Lage und beim Drehen der Sicherungshülse 8 fällt die Sperrkugel in die Vertiefung 7. In diesem in Fig. 2 dargestellten Zustand kann die Sicherungshülse 8 bis zum Anschlag 3 am Haltebund 2 axial bewegt werden, so daß die Befestigungsmutter 1 zum Ansetzen eines Werkzeugs (Maulschlüssel) freigegeben ist, aber die Sicherungshülse 8 dennoch an der Befestigungsmutter 1 gehalten und die Sperrkugel 9 eingekammert bleibt. Das heißt, beim Lösen der Befestigungsmutter 1 vom Gewindeabschnitt 10 der Achse eines Laufrades bleiben die Sicherungshülse 8 und die Sperrkugel 9 unlösbar mit der Befestigungsmutter 1 verbunden und können zum einen nicht verlorengehen oder verschmutzen und zum anderen wird der Montagevorgang erleichtert und verkürzt.

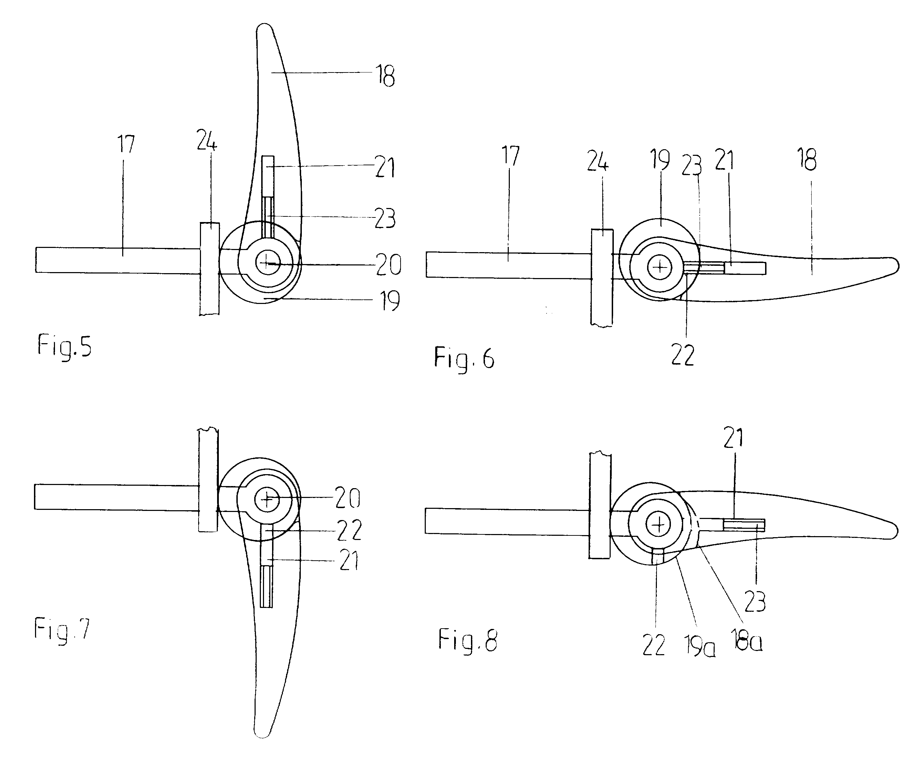

Bei einer anderen, in den Figuren 3 und 4 wiedergegebenen Ausführungsvariante der vorliegenden Erfindung kann das Lösen der Befestigungsmutter 11, die hier über ihre gesamte Länge kreiszylindrisch ausgebildet ist, ohne Werkzeug erfolgen. Die Befestigungsmutter 11 verfügt im Anschluß an den Mutternabschnitt 11a mit Innengewinde ebenfalls über einen den Anschlag 3 bildenden Haltebund 2 mit an dessen Umfangsfläche umlaufender Haltenut 6 sowie an einer Stelle in der Haltenut 6 vorgesehener Vertiefung 7, während die aus Außenzylinder 8a und Innenzylinder 8b mit Anschlagbund 8c und Aussparung 8d zweistückig ausgeführte, aber letztlich ein einziges Teil bildende Sicherungshülse 8, die nicht von der Befestigungsmutter 11 abgezogen werden kann, die Sperrkugel 9 nach dem Zurückziehen der Sicherungshülse 8 in der Vertiefung 7 unverlierbar einkammert. An der Umfangsfläche des kreiszylindrischen Mutternabschnitts 11a der Befestigungsmutter 11 ist angrenzend an den Anschlag 3 des Haltebundes 2 eine Paßfeder 12 angebracht, während in die zum Mutternabschnitt 11a gerichtete Umfangsfläche des Anschlagbundes 8c des Innenzylinders 8b der Sicherungshülse 8 eine Mitnahmenut 13 eingeformt ist. Außerdem ist die Sicherungshülse 8 an ihrem Außenumfang mit einem Betätigungshebel 14 fest verbunden. In der Umfangsfläche des kreiszylindrischen Mutternabschnitts 11a ist an dem dem Anschlagbund 8c gegenüberliegenden Bereich eine umlaufende Nut 15 zur Aufnahme eines Dichtungsringes 16 ausgebildet.

In dem in den Figuren 3 und 4 dargestellten Zustand befindet sich das Fahrrad in der auf Sattel und Lenker gestellten Montagestellung, in der die Sperrkugel 9 beim Drehen der Sicherungshülse 8 mit der Aussparung 8d zur Vertiefung 7 geführt werden und aufgrund der Schwerkraft in die Vertiefung 7 fallen kann. Damit ist die Verriegelungswirkung der Sperrkugel 9 aufgehoben, und die Sicherungshülse 8 kann bis zum Anschlag 3 des Haltebundes 2 der Befestigungsmutter 11 verschoben werden. Dabei schiebt sich die Mitnahmenut 13 auf die Paßfeder 12, so daß zwischen der Befestigungsmutter 11 und der Sicherungshülse 8 eine formschlüssige Verbindung hergestellt und die Befestigungsmutter 11 durch Einwirken auf den Betätigungshebel 14 von dem Gewindeabschnitt 10 der Achse abgeschraubt werden kann. Da bei dieser Ausführungsvariante zum Lösen der Befestigungsmutter 11 kein Werkzeug benötigt wird bzw. die Sicherungshülse 8 gleichzeitig als Werkzeug fungiert, wird der Montage- und Demontagevorgang weiter vereinfacht und eine zusätzliche Zeiteinsparung erzielt.

Die Schnellspannvorrichtung gemäß den Figuren 5 bis 8 besteht aus einem Zugstab 7, der sich - beispielsweise zur Befestigung des vorderen Laufrades - innerhalb der Radachse befindet und an einer Seite über ein festes Widerlager an einem Radgabelende gehalten ist, während an der in der Zeichnung dargestellten anderen Seite der Fahrradgabel 24 ein mit einem Betätigungshebel 18 in gelenkiger Verbindung stehender Spannexzenter 19 um eine Drehachse 20 am Zugstab 17 drehbar gelagert ist. Der Betätigungshebel 18 ist ebenfalls an der Drehachse 20 angelenkt und um diese drehbar. In Längsrichtung des Betätigungshebel 18 ist ausgehend von dessen zur Umfangsfläche 19a des Spannexzenters 19 gerichteter Teilfläche 18a ein als Sackbohrung ausgebildeter Führungskanal 21 vorgesehen. In der gleichen senkrechten Ebene wie der Führungskanal 21 ist im Spannexzenter 19 eine ebenfalls eine Sackbohrung bildende Mitnehmeraufnahme 22 ausgebildet, deren Innendurchmesser mit dem des Führungskanals 21 übereinstimmt und die in mit der Fahrradgabel verklemmtem Zustand des Spannexzenters 19 etwa im rechten Winkel zur Achse des Zugstabes 17 ausgerichtet ist. Im Führungskanal 21 ist ein in dessen Längsrichtung beweglicher Mitnehmer 23 angeordnet, dessen Länge geringfügig kleiner als die des Führungskanals 21, aber deutlich größer als die der Mitnehmeraufnahme 22 ist. Der Mitnehmer 23 ist mit mindestens einem in dessen Längsrichtung durchgehenden Hohlraum versehen oder als Rohr ausgebildet. Der Betätigungshebel 18 ist an seinem den Spannexzenter 19 umfassenden Bereich gabelförmig ausgebildet.

Fig. 5 zeigt die Schnellspannvorrichtung in einer gegenüber der fahrbereiten Gebrauchstellung um 180° gedrehten Lage des Fahrrades. Der Spannexzenter 19 befindet sich in einem mit der Fahrradgabel 24 fest verspannten Zustand, in dem das Laufrad (nicht dargestellt) fest an der Fahrradgabel 24 gehalten ist. In dieser Lage sind der Führungskanal 21 und die Mitnehmeraufnahme 22 mit ihren Öffnungen fluchtend zueinander gerichtete. Der Mitnehmer 23 ist sowohl mit dem Betätigungshebel 18 als auch mit dem Spannexzenter 19 in Eingriff, und beim Verschwenken des Betätigungshebels 18 um die Drehachse 20 in Richtung des Pfeils A in Fig. 1 um 90° in die in Fig. 6 dargestellte Lage wird der Spannexzenter 19 durch den Mitnehmer 23 mitgenommen und somit die Klemmverbindung mit der Fahrradgabel 24 gelöst. Die Mitnehmeraufnahme 22 und der Führungskanal 21 befinden sich gemäß Fig. 2 in einer Flucht und in waagerechter Lage, wobei der Mitnehmer 23 weiterhin mit beiden Sachbohrungen in Eingriff bleibt. Nach dem Wiedereinsetzen des Laufrades wird der Betätigungshebel 18 in Richtung des Pfeils B verstellt, bis der Spannexzenter 19 fest mit der Fahrradgabel 24 verklemmt ist.

Fig. 7 zeigt die Befestigungsvorrichtung für ein Laufrad (nicht dargestellt) in der fahrbereiten Position des Fahrrades und wenn das Fahrrad in dieser Gebrauchslage gegebenenfalls mittels Bügelschloß oder dgl. an einen feststehenden Gegenstand, beispielsweise ein Geländer, einen Fahrradständer usw., angeschlossen ist. In diesem Zustand weist der Betätigungshebel 18 nach unten, so daß der Mitnehmer 23 aufgrund der Schwerkraft am Boden des Führungskanals 21 liegt. Beim Drehen des Betätigungshebels 18 kann der Spannexzenter 19, wie Fig. 8 zeigt, nicht mitgenommen und somit auch das Laufrad nicht demontiert werden. Erst nach Drehen des Fahrrades in die in Fig. 5 dargestellte, auf Sattel und Lenkrad stehende Position, was nur bei nicht angeschlossenem Fahrrad möglich ist, kann die Öffnung des Führungskanals 21 auf die nach oben weisende Öffnung der Mitnehmeraufnahme 22 gerichtet werden, so daß der Mitnehmer 23, wie anhand der Fig. 5 erläutert, mit dem Spannexzenter 19 in Eingriff kommt und dieser gelöst werden kann.

### Bezugszeichenliste:

- 1: Befestigungsmutter
- 2: Haltebund
- 3: Anschlag (Anschlagfläche)
- 4: Gewindebohrung
- 5: Sackbohrung
- 6: Haltenut
- 7: Vertiefung
- 8: Sicherungshülse
- 8a: Außenzylinder
- 8b: Innenzylinder
- 8c: Anschlagbund
- 8d: Aussparung
- 9: Sperrkugel
- 10: Gewindeabschnitt
- 11: Befestigungsmutter
- 11a: kreiszylindrischer Mutternabschnitt
- 12: Paßfeder
- 13: Mitnahmenut
- 14: Betätigungshebel
- 15: umlaufende Nut
- 16: Dichtungsring
- 17: Zugstab
- 18: Bestätigungshebel
- 18a: Teilfläche von 18
- 19: Spannexzenter
- 19a: Umfangsfläche von 19
- 20: Drehachse
- 21: Führungskanal
- 22: Mitnehmeraufnahme
- 23: Mitnehmer
- 24: Fahrradgabel

## Patentansprüche

1. Diebstahlsicherung für Fahrräder, die bereits durch ein Bügelschloß oder dgl. mit einem im wesentlichen feststehenden Haltemittel verbunden sind, zum Verhindern der unbefugten Demontage von mit einem Befestigungsmittel angebrachten Fahrradteilen, wobei das von einer drehbaren Hülse umgebene Befestigungsmittel nur in der auf den Kopf gestellten Lage des Fahrrades lösbar ist, indem ein in einer Ausnehmung der Hülse gehaltenes Sperrelement aufgrund der Schwerkraft in eine Vertiefung des Befestigungsmittels fällt, dadurch gekennzeichnet, daß die über das Sperrelement (9) in einer umlaufenden Haltenut (6) des als Befestigungsmutter (1, 11) ausgebildeten Befestigungsmittels geführte, als Sicherungshülse (8) dienende Hülse in einer nach außen verschobenen, das Lösen der Befestigungsmutter (1, 11) ermöglichenden Endlage durch Anschlagmittel (2, 3, 8c) zur Verhinderung des vollständigen Abziehens an der Befestigungsmutter (1, 11) gehalten ist und das Sperrelement (9) in diesem Zustand der Befestigungsmutter zwischen dieser und der Sicherungshülse (8) eingekammert ist.

2. Diebstahlsicherung nach Anspruch 1, dadurch gekennzeichnet, daß als Anschlagmittel am Umfang der Befestigungsmutter (1, 11) an der nach außen gerichteten freien Seite ein kreisförmiger, die Haltenut (6) mit dem Sperrelement (9) aufnehmender und einen Anschlag (3) bildender Haltebund (2) und an der inneren Umfangsfläche der Sicherungshülse (8) ein Anschlagbund (8c) vorgesehen sind.

3. Diebstahlsicherung nach Anspruch 1 und 2, dadurch gekennzeichnet, daß die Sicherungshülse (8) aus einem an einer Stirnseite geschlossenen kreisförmigen Außenzylinder (a) und einem kreisförmigen Innenzylinder (8b), an dessen freier Seite der Anschlagbund (8c) angeformt ist, gebildet ist, wobei nach dem Aufschieben des Innenzylinders (8b) auf die Befestigungsmutter (1) und dem Einlegen des Sperrelements (9) der Innenzylinder (8b) fest mit dem Außenzylinder (8a) verbindbar ist.

4. Diebstahlsicherung nach Anspruch 4, dadurch gekennzeichnet, daß der Innenzylinder (8b) mit dem Außenzylinder (8a) kraft- und/oder formschlüssig verbunden ist.

5. Diebstahlsicherung nach einem der Ansprüche 1 bis 4, dadurch gekennzeichnet, daß die Befestigungsmutter (1) für den formschlüssigen Eingriff eines separaten Werkzeugs in dem bis zum Anschlag (3) des Haltebundes (2) reichenden zugänglichen Bereich entsprechend profiliert ausgebildet ist.

6. Diebstahlsicherung nach einem der Ansprüche 1 bis 4, dadurch gekennzeichnet, daß die Befestigungsmutter (11) in dem Bereich bis zum Anschlag (3) des Haltebundes (2) im Querschnitt kreisförmig ausgebildet ist, wobei am Umfang dieses Bereichs eine Paßfeder (12) befestigt ist, die bei zurückgezogener Sicherungshülse (8) in eine am Umfang des Anschlagbundes (8c) ausgebildete Mitnahmenut (13) eingreift, und am Außenumfang der Sicherungshülse (8) ein Betätigungshebel (14) angebracht ist.

7. Diebstahlsicherung nach Anspruch 6, dadurch gekennzeichnet, daß im Randbereich der Befestigungsmutter (11) eine umlaufende Nut (15) zur Aufnahme eines Dichtungsrings (16), der bei aufgeschobener Sicherungshülse (8) mit der Innenumfangsfläche des Anschlagbundes (8c) in Verbindung steht, vorgesehen ist.

8. Diebstahlsicherung nach einem der Ansprüche 1 bis 7, dadurch gekennzeichnet, daß an der Befestigungsmutter (1, 11) eine die Lage der die Sperrkugel (9) aufnehmenden Vertiefung (7) kennzeichnende Markierung angebracht ist.

9. Diebstahlsicherung für Fahrräder, die bereits durch ein Bügelschloß mit einem im wesentlichen feststehenden Haltemittel verbunden sind, zum Verhindern der unbefugten Demontage von mit einem Befestigungsmittel angebrachten Fahrradteilen, wobei das von einer drehbaren Hülse umgebene Befestigungsmittel nur in der auf den Kopf gestellten Lage des Fahrrades lösbar ist, indem ein in einer Ausnehmung der Hülse gehaltenes Sperrelement aufgrund der Schwerkraft in eine Vertiefung des Befestigungsmittels fällt, dadurch gekennzeichnet, daß das Befestigungsmittel ein mit einem Betätigungshebel (18) verbundener Spannexzenter (19) ist und der an einem Ende ein Hülsenteil bildende Betätigungshebel (18) drehbar um den Umfang des Spannexzenters (19) gelagert ist und in einem zum Spannexzenter hin offenen Führungskanal (21) des Betätigungshebels ein Mitnehmer (23) als Sperrelement beweglich aufgenommen ist, während der Spannexzenter eine Mitnehmeraufnahme (22) aufweist, die in Gebrauchslage des Fahrrades bei festgezogenem Spannexzenter zur Fahrbahnoberfläche hin weist und in die der Mitnehmer (23) zum Lösen des Spannexzenters in der um 180° gedrehten Lage des Fahrrades aufgrund der Schwerkraft fällt, jedoch mit dem Führungskanal (21) noch in Eingriff bleibt.

10. Diebstahlsicherung nach Anspruch 9, dadurch gekennzeichnet, daß der Betätigunghshebel (18) an einer Drehachse (20) des Spannexzenters (19) gelagert und mit seiner einer Umfangsfläche (19a) des Spannexzenters gegenüberliegenden Teilfläche (18a) um den Spannexzenter verschwenkbar ist, wobei der Führungskanal (21) zur vollständigen Aufnahme des Mitnehmers (23) eine von der Teilfläche (18a) ausgehende Sackbohrung ist und die Mitnehmeraufnahme (22) im Spannexzenter (19) von dessen Umfangsfläche (19a) - in der gleichen senkrechten Ebene wie der Führungskanal liegend - ausgeht.

11. Diebstahlsicherung nach Anspruch 9 und 10, dadurch gekennzeichnet, daß der Mitnehmer (23) als Stange oder Rohr ausgebildet ist.

12. Diebstahlsicherung nach Anspruch 9 und 10, dadurch gekennzeichnet, daß der Betätigungshebel (18) im Bereich des Spannexzenters gabelförmig ausgebildet und beidseitig an dessen Drehachse (20) angelenkt ist.
